# EUROPÄISCHE PATENTSCHRIFT

(11) **EP 2 964 416 B1**
(45) Veröffentlichungstag und Bekanntmachung des Hinweises auf die Patenterteilung: **19.07.2023**
(21) Anmeldenummer: 14725604.4
(22) Anmeldetag: 03.04.2014
(51) Int. Cl.: B23K 26/00, B23K 26/06, H01L 21/311, H01S 3/00

(54) **VERFAHREN ZUM TRENNEN EINES SUBSTRATES**
METHOD FOR SEPARATING A SUBSTRATE
PROCÉDÉ DE SÉPARATION D'UN SUBSTRAT

(30) Priorität: 04.04.2013 DE 102013103370; 31.10.2013 DE 102013112035
(43) Veröffentlichungstag der Anmeldung: 13.01.2016
(73) Patentinhaber: LPKF Laser & Electronics SE, 30827 Garbsen (DE)
(72) Erfinder: KRÜGER, Robin Alexander, 30173 Hannover (DE); AMBROSIUS, Norbert, 47624 Kevelaer (DE); OSTHOLT, Roman, 30855 Langenhagen (DE)
(74) Vertreter: Scheffler, Jörg
(86) Internationale Anmeldenummer: PCT/DE2014/100119
(87) Internationale Veröffentlichungsnummer: WO 2014/161535

(56) Entgegenhaltungen:
- WO-A1-2012/094737
- WO-A2-2012/006736
- AU-A1- 2011 279 374
- DE-A1- 10 154 361
- JP-A- 2005 288 503
- JP-A- 2006 352 171
- US-A- 4 911 783
- US-A1- 2007 298 529
- US-A1- 2012 142 186

## Beschreibung

Die Erfindung betrifft ein Verfahren zum Trennen, insbesondere Zerteilen eines beispielsweise als Interposer oder Mikrobauteil einsetzbaren Substrates, insbesondere Glassubstrates, mittels eines Laserstrahles nach dem Oberbegriff des Hauptanspruchs.

Ein solches Verfahren und eine zur Durchführung des Trennprozesses bestimmte Vorrichtung werden in der Praxis beispielsweise zum Vereinzeln oder Spalten von Wafern, Glassubstraten und Platten verwendet. Derartige Substrate werden beispielsweise auch als sogenannte Interposer zur elektrischen Verbindung der Anschlüsse mehrerer homogener oder heterogener Mikrochips eingesetzt.

In der Praxis ist die Vereinzelung durch Schneiden bei der Behandlung von Wafern oder Glassubstraten ein kritischer Prozessschritt, der typischerweise auf dem Einsatz von Diamantschneidwerkzeugen beruht und beispielsweise bei Displays mit einer Geschwindigkeit von 30 cm/sec durchgeführt wird. Die mit diesem Prozess erzielbare Qualität der Kanten ist jedoch unbefriedigend und führt zu erheblichen Nachteilen in der Lebensdauer, Qualität und Zuverlässigkeit des Produktes, aber auch bei den entstehenden Reinigungskosten.

Als Herausforderung gestaltet sich hier die Verarbeitung des Substrates zu gebrauchsfähigen Elementen. Insbesondere ist die wirtschaftliche Einbringung der Vielzahl von Trennflächen in ein Substrat beispielsweise bei der Herstellung von Wafern im Stand der Technik noch nicht gelöst.

Die WO 2012 / 006 736 A2 (Basis für den Oberbegriff des Anspruchs 1) beschreibt bereits ein Verfahren zum Trennen eines insbesondere ebenen Substrates mittels eines optischen Systems, wobei die Dicke des Substrates im Bereich einer Trennlinie 2 mm nicht übersteigt, mittels gepulster Laserstrahlung mit einer Pulsdauer. Das Substratmaterial des Substrates ist für die Laserwellenlänge zumindest teilweise transparent und die Laserstrahlung wird mithilfe des optischen Systems der Brennweite fokussiert. Durch die Intensität der Laserstrahlung kommt es zu einer Modifikation des Substrates entlang einer Strahlachse der Laserstrahlung, jedoch nicht zu einem durchgehenden Materialabtrag. Dabei erfolgt die Modifikation des Substrates entlang einer Strahlachse des Laserstrahls, ohne dass es zu einer das Substrat durchdringenden Zerstörung des Substrates kommt. Die gepulste Laserstrahlung wird entlang einer beliebigen Trennlinie parallel zu der Haupterstreckungsebene des Substrates bewegt, wodurch ein nachfolgender Separationsvorgang entlang der Trennlinie erfolgt, wobei die Laserstrahlung durch nichtlineare Selbstfokussierung innerhalb der Pulsdauer eines Einzelpulses durch dasselbe, an sich unveränderte optische System mit einer von der ursprünglichen Brennweite verschiedenen Brennweite fokussiert wird. Der nachfolgende Separationsvorgang erfolgt durch einen anisotropen Abtrag im Wesentlichen entlang der Trennlinie, wobei die Intensität eines Einzelpulses der Laserstrahlung über den zeitlichen Verlauf des Einzelpulses eine von einem Minimum über einen Mittelwert bis zu einem Maximum ansteigende und danach abfallende Intensität aufweist und sich unabhängig von der durch die Fokussieroptik des Laserbearbeitungskopfes bestimmten geometrischen Fokuslage die intensitätsabhängigen Fokuslagen der Laserstrahlung verändern.

Die US 2007 / 298 529 A1 betrifft ein Verfahren zum Trennen von auf einem Substrat ausgebildeten lichtemittierenden Halbleitervorrichtungen, wobei ein Impulslaserstrahl mit einer Pulsbreite von weniger als 10 ps in einem Substrat auf das Substrat fokussiert, um dadurch eine Mehrphotonenabsorption in dem Substrat zu bewirken. Durch Mehrphotonenabsorption wird entlang einer auf einer Oberfläche des Substrates vorbestimmten Teilungslinie eine Rille gebildet, wobei die Rille in Richtung der vorbestimmten Teilungslinie im Wesentlichen kontinuierlich ist. Anschließend wird eine äußere Kraft aufgebracht, um dadurch eine Spaltfläche entlang der durchgehenden Rille und der unterbrochenen inneren strukturell geänderten Abschnitte zu bilden, wodurch die lichtemittierenden Halbleitervorrichtungen voneinander getrennt werden

Die US 2012 / 142 186 A1 offenbart bereits ein Verfahren zum Herstellen eines Interposers, bei dem modifizierte Bereiche in einem Objekt gebildet werden, in denen sich physikalische Eigenschaften wie Dichte, Brechungsindex oder mechanische Festigkeit von denen ihrer Umgebung unterscheiden. Anschließend erfolgt ein Ätzschritt zum anisotropen Ätzen des Objekts, um selektiv entlang des modifizierten Bereichs eine Vielzahl von Durchgangslöchern in dem Objekt zu bilden.

Bei der JP 2005 - 288 503 A werden mehrere konzentrische Laserstrahlen mit einer nach innen zunehmenden Lichtintensität erzeugt. In der Nähe des Fokuspunktes des Laserstrahls entsteht ein sich in Tiefenrichtung erstreckender Riss durch Multiphotonenabsorption und Selbstkonvergenzeffekte. Die Trennung entsteht infolge einer Mehrzahl von Rissen.

Die DE 101 54 361 A1 bezieht sich auf ein Verfahren zur Herstellung von Mikrostrukturen, bei dem selektiv eine ätzresistente Beschichtung mittels Laserstrahlung abgetragen und anschließend geätzt wird.

Die JP 2006 - 352 171 A offenbart ein Verfahren, um ein schnelles und gut beherrschbares Trennverfahren ohne einen sequentiellen Abtrag bei zugleich geringem Energieeintrag in das Substrat zu erreichen. Das Trennen erfolgt durch einen anisotropen Materialabtrag mittels Flüssigätzen.

Aus der US 2013 / 126 573 A1 ist ein Trennverfahren zur Herstellung eines Substrates bekannt, wobei das Substrat mit einem oder mehreren Impulsen eines fokussierten Laserstrahles bestrahlt wird. Dabei ist das Substrat transparent für den fokussierten Laserstrahl, wobei allerdings die Laserpulse hinsichtlich der Energie und Pulsdauer so ausgewählt sind, dass ein kanalartiges Filament innerhalb des Substrates erzeugt wird. Durch Verschieben des Substrates relativ zu dem fokussierten Laserstrahl werden zusätzliche, örtlich beabstandete Filamente eingebracht, welche so eine Trennfläche definieren. Das Substrat besteht beispielsweise aus Glas, Kristall, Quarz, Diamant oder Saphir. Bei einer entsprechenden Materialstärke des Substrates werden mehrere Fokuspunkte des fokussierten Laserstrahles so ausgewählt, dass Filamente in mindestens einer der zwei oder mehr Schichten erzeugt werden. Dabei soll sich das durch den fokussierten Laserstrahl in einer ersten Schicht erzeugte Filament in mindestens eine zusätzliche Schicht ausbreiten und dort ein zweites Filament in dieser weiteren Schicht erzeugen. Weiterhin kann auch vorgesehen sein, einen zweiten Strahlfokus in einer zweiten Schicht zu erzeugen. Als nachteilig erweisen sich bei diesem Verfahren der Einsatz von vergleichsweise teuren Femtosekunden- bzw. Pikosekunden-Lasern und die aufwendige Konfiguration, bei der eine Pulsfolge von Einzelpulsen und bestimmten Wiederholraten der Pulsfolgen nach bestimmten Vorgaben vorgesehen ist. Insbesondere ist eine Zeitverzögerung zwischen aufeinanderfolgenden Pulsen in der Pulsfolge kleiner als eine Zeitdauer der Entspannung einer Materialmodifikation.

Unter der Bezeichnung "Stealth Dicing" ist ein Laser-Bearbeitungs-Verfahren bekannt, bei dem in einem ersten Schritt ein Laserstrahl auf eine Schicht innerhalb eines Substrates einwirkt. In einem zweiten Schritt wird eine Zugspannung angewendet, um entlang der Einwirkungspunkte in der Schicht das Substrat zu trennen. Diese Schicht ist eine innere Fläche in dem Wafer, die von dem Laser innerhalb des Substrates während der Bearbeitung modifiziert wird und bei der Bearbeitung den Startpunkt zum Aufteilen des Substrates bildet. Die Zugspannung bewirkt dann die Trennung des Substrates in kleine Abschnitte.

Ein solches Verfahren zum Trennen eines Substrates, beispielsweise eines Halbleitersubstrates bei der Herstellung eines Halbleiterbauelementes oder dergleichen, ist beispielsweise aus der US 8 518 800 B2 bekannt. Dabei wird das Substrat so mit Laserlicht bestrahlt, dass dabei innerhalb des Substrates ein Phänomen der Multiphotonabsorption erzeugt wird, bei dem innerhalb des Substrates ein Lichtkonvergenzpunkt und dadurch ein modifiziertes Gebiet gebildet werden. Indem innerhalb des Substrates ein Schnittansatzpunktbereich gebildet wird, wird ausgehend von dem als Ausgangspunkt fungierenden Schnittansatzpunktbereich ohne äußere Einwirkung oder unter Ausübung einer Kraft in dem Substrat ein Bruch in Richtung dessen Dickenausdehnung erzeugt.

Weiterhin ist aus der EP 2 503 859 A1 ein Verfahren bekannt, bei dem ein Glassubstrat mit Durchgangslöchern versehen wird, wobei das Glassubstrat aus einem Isolator wie Glas, beispielsweise Silikatglas, Saphir, Kunststoff oder Keramik und Halbleitern wie Silizium besteht. Das Glassubstrat wird mit einem Laser, beispielsweise einem Femtosekundenlaser, bestrahlt, der auf einen Fokuspunkt an einer gewünschten Position innerhalb des Glassubstrates fokussiert wird. Die Durchgangslöcher werden mit einem Verfahren erzeugt, bei dem das Glassubstrat mit den durch den Laser modifizierten Bereichen in eine Ätzlösung getaucht wird und so die modifizierten Bereiche aus dem Glassubstrat entfernt werden. Dieses Ätzen nutzt den Effekt, dass im Vergleich zu Bereichen des Glassubstrates, die nicht modifiziert wurden, der modifizierte Bereich extrem schnell geätzt wird. Auf diese Weise können Sackbohrungen oder Durchgangsöffnungen erzeugt werden. Für das Füllen der Durchgangsöffnung eignet sich eine Kupferlösung. Um eine gewünschte "Tiefenwirkung", also ein Durchgangsloch zwischen den Substrataußenseiten zu erreichen, muss der Fokuspunkt bei fortgesetzter Bestrahlung entsprechend verlagert, also in Richtung der Z-Achse nachgeführt werden.

Ganz allgemein ist die Kombination einer selektiven Laserbehandlung mit einem nachfolgenden Ätzprozess als selektives laserinduziertes Ätzen auch unter der Bezeichnung ISLE bekannt (In-volume selective laser-induced etching).

Weiterhin ist aus der DE 10 2010 025 966 B4 ein Verfahren bekannt, bei dem in einem ersten Schritt auf das Glassubstrat fokussierte Laserimpulse gerichtet werden, deren Strahlungsintensität so stark ist, dass es zu lokaler, athermischer Zerstörung entlang eines filamentartigen Kanales im Glas kommt. In einem zweiten Verfahrensschritt werden die filamentartigen Kanäle zu Löchern aufgeweitet, indem gegenüberstehenden Elektroden Hochspannungsenergie zugeführt wird, was zu dielektrischen Durchbrüchen durch das Glassubstrat entlang der filamentartigen Kanäle führt. Diese Durchbrüche erweitern sich durch elektrothermische Aufheizung und Verdampfung von Lochmaterial, bis der Vorgang bei Erreichen des gewünschten Lochdurchmessers durch Abschalten der Energiezufuhr gestoppt wird. Alternativ oder zusätzlich können die Kanäle auch durch reaktive Gase aufgeweitet werden, die mittels Düsen auf die Lochungsstellen gerichtet werden. Die Durchbruchsstellen können auch durch zugeführtes Ätzgas aufgeweitet werden. Als nachteilig erweist sich der vergleichsweise aufwendige Vorgang, der dadurch entsteht, dass zuerst durch die athermische Zerstörung das Glassubstrat durchbrochen und im nächsten Schritt der Durchmesser der filamentartigen Kanäle zu Löchern aufgeweitet werden muss.

Ferner ist aus der US 6 400 172 B1 das Einbringen von Durchbrechungen in Halbleitermaterialien mittels Laser bekannt.

Der Erfindung liegt die Aufgabe zugrunde, eine Möglichkeit zu schaffen, ein Verfahren zum Trennen eines Substrates wesentlich zu vereinfachen und insbesondere den Zeitaufwand für die Durchführung zu vermindern. Insbesondere soll ein schnelles und gut beherrschbares Trennverfahren ohne einen sequentiellen Abtrag bei zugleich geringem Energieeintrag in das Substrat erreicht werden.

Die Aufgabe wird erfindungsgemäß mit einem Verfahren gemäß den Merkmalen des Anspruches 1 gelöst. Die weitere Ausgestaltung der Erfindung ist den Unteransprüchen zu entnehmen.

Erfindungsgemäß ist also ein Verfahren vorgesehen, bei dem die Differenz zwischen der Brennweite und der ursprünglichen Brennweite größer ist als die Dicke des Substrates im Bereich der einzubringenden Trennlinie, zumindest aber 20 µm beträgt, und der anisotrope Materialabtrag durch Ätzung durchgeführt und die Materialtrennung in den modifizierten Bereichen des Substrates durch den anisotropen Materialabtrag mittels Flüssigätzen, Trockenätzen oder Dampfphasenätzen herbeigeführt wird.

Die Erfindung macht sich dabei zunutze, dass die Intensität eines gepulsten Lasers bezogen auf einen Einzelpuls nicht konstant ist, sondern über den zeitlichen Verlauf des Einzelpulses eine bis zu einem Maximum ansteigende und danach abfallende Intensität aufweist. Indem aufgrund der zunehmenden Intensität auch der Brechungsindex, bezogen auf einen Einzelpuls über den zeitlichen Verlauf entsprechend einer Normalverteilung, bis zu einem Maximum zunimmt, verändert sich die Brennweite des optischen Systems, also der Abstand von einem Laserbearbeitungskopf bzw. der Linse, und zwar unabhängig von der durch die Fokussieroptik bestimmten geometrischen Fokuslage.

Dieser Effekt der nichtlinearen Selbstfokussierung wird genutzt, indem der Abstand der Fokuslagen zwischen einer maximalen und einer minimalen Intensität zumindest der gewünschten Längserstreckung, also der Dicke im Bereich einer Trennlinie entspricht. Daraus ergibt sich in verblüffend einfacher Weise eine örtliche Verlagerung in Richtung der Strahlachse während der Dauer eines Einzelpulses, die zu der gewünschten Modifikation im Bereich der gesamten Haupterstreckung in Richtung der Strahlachse führt. Dabei kann auf eine Nachführung der Fokuslage, wie dies beim Stand der Technik unvermeidlich ist, verzichtet werden. Insbesondere ist also keine Steuerung für die Bewegung des Laserfokus durch das Substrat erforderlich. Auf diese Weise wird entlang der Trennlinie ein modifizierter Bereich des Substrates als eine Trennfläche oder Sollbruchfläche in dem Substrat erzeugt. Damit entfällt erfindungsgemäß nicht nur der hierzu erforderliche Steuerungsaufwand, sondern auch die Bearbeitungsdauer wird erheblich, beispielsweise auf die Dauer eines Einzelpulses reduziert. Der nichtlineare Brechungsindex des transmissiven Mediums hängt dabei linear von der Intensität ab, sodass die Auswahl hinsichtlich eines geeigneten Materials sowie der geeigneten Abmessungen von der Intensität der eingesetzten Laserstrahlung abhängt.

Dabei wird der Laserstrahl derart kurzzeitig auf das Substrat gerichtet, dass lediglich eine Modifikation des Substrates entlang einer Strahlachse des Laserstrahles erfolgt, ohne dass es zu einer das Substrat durchdringenden Zerstörung des Substrates kommt, wobei im nächsten Schritt ein anisotroper Materialabtrag in denjenigen Bereichen des Substrates durchgeführt wird, die zuvor eine Modifikation mittels des Laserstrahles erfahren haben, und so die Trennung gegebenenfalls in Verbindung mit einer unterstützenden äußeren Krafteinwirkung durchzuführen.

Der Laserenergieeintrag dient dabei zur Anregung bzw. Auslösung einer Reaktion und einer Modifikation durch Umwandlung, deren Wirkung erst im nachfolgenden Verfahrensschritt zu der gewünschten Materialtrennung führt bzw. genutzt wird.

Indem der Trennprozess aufgrund der Modifikation und gegebenenfalls eines nachfolgenden anisotropen Materialabtrags durch ein Ätzverfahren erfolgt, ist für den Trennvorgang kein sequentielles, sondern ein flächig einwirkendes Abtragsverfahren nutzbar, welches lediglich sehr geringe Anforderungen an den Prozess stellt. Vielmehr lässt sich über die Einwirkungsdauer der Materialabtrag quantitativ und qualitativ für alle in der beschriebenen Weise vorbehandelten und dementsprechend modifizierten Bereiche zugleich durchführen, sodass der Zeitaufwand für die Erzeugung der Vielzahl der Ausnehmungen oder Durchbrechungen in der Summe wesentlich reduziert ist.

Der Fokuspunkt bei minimaler Intensität könnte auf eine äußere Oberfläche des Substrates gerichtet werden. Als besonders Erfolg versprechend hat es sich hingegen bereits erwiesen, wenn die Laserstrahlung auf eine abgewandte Seite des Substrates beabstandet zu diesem fokussiert wird, sodass der Fokuspunkt der Laserstrahlung so eingestellt wird, dass dieser auf einer der Laserstrahlung abgewandten Rückseite mit Abstand zu der Oberfläche des Substrates liegt. Hierdurch wird also zunächst der Laserstrahl auf einen außerhalb des Substrates liegenden Fokuspunkt gerichtet. Der aufgrund der zunehmenden Intensität veränderte Brechungsindex führt dann zu einer örtlichen Verlagerung des Fokuspunktes entlang der Strahlachse durch das Substrat hindurch. Dadurch wird sichergestellt, dass jeder Fokuspunkt innerhalb des Substrates mit einer zur Erzeugung der Modifikation ausreichend hohen Intensität beaufschlagt ist.

Selbstverständlich kann die Dauer der Strahleinwirkung bei unveränderter relativer Position des Laserbearbeitungskopfes gegenüber dem Substrat mehrere Pulslängen umfassen, um so beispielsweise die Modifikation des Substratmaterials weiter zu optimieren. Besonders vorteilhaft ist es hingegen, wenn die Laserstrahlung für die Dauer eines Einzelpulses auf einem jeweiligen Fokuspunkt gelenkt wird. Somit sind also vorhergehende ebenso wie nachfolgende Pulse des Laserstrahles auf in der Ebene des Substrates beabstandete Positionen gerichtet, sodass benachbarte Fokuspunkte einen Abstand in der Ebene des Substrates aufweisen.

Vorzugsweise wird der Abstand der benachbart in das Substrat einzubringenden Modifikationen entlang der Trennlinie so gewählt, dass die modifizierten Bereiche unmittelbar aneinandergrenzen oder einen sehr geringen Abstand zueinander aufweisen.

Die Modifikationen könnten durch eine Laserbearbeitung eingebracht werden, bei der eine Positionierung des Laserbearbeitungskopfes und die Laserbearbeitung abwechselnd durchgeführt werden. Vorzugsweise wird hingegen, während die Laserstrahlung auf das Substrat gelenkt wird, eine stetige Relativbewegung zwischen dem Laserstrahl bzw. dem Laserbearbeitungskopf und dem Substrat durchgeführt, sodass also der Laserstrahl kontinuierlich in einer "fliegenden" Bewegung über das Substrat geführt wird, sodass also eine ununterbrochene Änderung der Relativposition eine extrem schnelle Bearbeitungsdauer des Substrates ergibt. Insbesondere kann die relative Position des Substrates in Bezug auf den Laserstrahl mit konstanter Geschwindigkeit verändert werden, sodass bei einer konstanten Pulsfrequenz der Abstand der zu erzeugenden Modifikationen einem vorbestimmten Rastermaß folgt.

Indem der Laser mit einer Wellenlänge betrieben wird, für die das Substrat transparent ist, ist eine Durchdringung des Substrates sichergestellt. Insbesondere wird dadurch eine im Wesentlichen zylindrische Modifikationszone koaxial zu der Laserstrahlachse herum sichergestellt, die zu einem konstanten Durchmesser der Durchbrechung oder der Ausnehmung führt.

Darüber hinaus kann es auch von Vorteil sein, wenn durch den Laser zusätzlich auch ein Oberflächenbereich abgetragen wird, um die Einwirkungszone derart auszugestalten, dass ein kegelförmiger Einlassbereich der Durchbrechung entsteht. Auf diese Weise kann der spätere Trennvorgang vereinfacht werden. Zudem wird in diesem Bereich beispielsweise die Einwirkung eines Ätzmittels konzentriert.

Bei einer anderen, ebenfalls besonders Erfolg versprechenden Ausgestaltung des Verfahrens wird das Substrat vor der Laserbehandlung mit einem Ätzresist auf zumindest einer Oberfläche flächig beschichtet. Durch Einwirkung eines Laserstrahles wird zugleich in einer punktförmigen Einwirkungszone das Ätzresist auf zumindest einer Oberfläche abgetragen und die Modifikation in dem Substrat erzeugt. Auf diese Weise werden die nicht modifizierten Bereiche vor einer unerwünschten Einwirkung im nachfolgenden Ätzprozess geschützt und die Oberfläche daher nicht beeinträchtigt. Dabei behindert das Ätzresist nicht die Modifikation des darunter liegenden Substrates. Vielmehr ist das Ätzresist für die Laserstrahlung entweder durchlässig oder wird nahezu punktförmig durch die Laserstrahlung abgetragen, beispielsweise also verdampft. Weiterhin ist nicht ausgeschlossen, dass das Ätzresist solche Substanzen enthält, die für die Modifikation unterstützend wirken, beispielsweise also den Modifikationsvorgang beschleunigen.

Grundsätzlich ist das Verfahren nicht auf bestimmte Materialzusammensetzungen des Substrates beschränkt. Besonders Erfolg versprechend ist es allerdings, wenn das Substrat als einen wesentlichen Materialanteil ein Aluminosilikat, insbesondere ein Boro-Aluminosilikat aufweist.

Entlang der modifizierten Bereiche lässt sich eine definierte Trennfläche erzeugen, wobei gegebenenfalls die Trennung durch zusätzliche äußere Krafteinwirkung oder eine thermische Nachbehandlung optimiert werden kann, sodass ein nachfolgendes Ätzverfahren entbehrlich sein kann.

Dabei wird in den modifizierten Bereichen des Substrates durch einen anisotropen Materialabtrag mittels Flüssigätzen, Trockenätzen oder Dampfphasenätzen, gegebenenfalls auch durch Verdampfen mittels Hochspannung oder Hochfrequenz, die Materialtrennung herbeigeführt. Gegebenenfalls kann der Trennvorgang noch durch eine äußere Krafteinwirkung, insbesondere eine Zugkraft oder Druckkraft, begünstigt werden. Alternativ kann auch ohne äußere Krafteinwirkungen der Trennvorgang problemlos realisiert werden, wenn das Substrat durch Eigenspannung vorgespannt ist.

Eine zur Durchführung des Verfahrens geeignete Vorrichtung ist insbesondere mit zumindest einer ebenen Fläche oder einem beispielsweise als eine Planplatte ausgeführten transmissiven Medium mit einem größeren intensitätsabhängigen Brechungsindex bzw. mit einer größeren intensitätsabhängigen Brechzahl als Luft ausgestattet, welches insbesondere zwischen dem Laserbearbeitungskopf und dem Substrat angeordnet ist, derart, dass die Laserstrahlung durch das transmissive Medium hindurch auf das Substrat ablenkbar ist. Hierdurch wird der intensitätsabhängige Brechungsindex bzw. die intensitätsabhängige Brechzahl des transmissiven Mediums genutzt, um in Verbindung mit einem gepulsten Laser während der Dauer jedes Einzelpulses und der damit einhergehenden Schwankung der Intensität während des Einzelpulses eine axiale Veränderung der Fokuslage zu erzeugen. Somit ist also anders als beim Stand der Technik die Fokuslage zumindest während der Dauer eines Einzelpulses nicht unverändert, sondern die Fokuslage verlagert sich bezogen auf die Gesamtdauer des Einzelpulses entlang einer Linie auf der Strahlachse. Es ist leicht verständlich, welche wesentlichen Vorteile sich dadurch ergeben, dass sich die Fokuslage ohne eine Nachführung der Fokussieroptik des Laserbearbeitungskopfes verlagert. Insbesondere wird dadurch die Bearbeitungsdauer wesentlich verkürzt und auch der Steuerungsaufwand vermindert. Beispielsweise kann bei einem ebenen Substrat auf die Nachführung der Z-Achse verzichtet werden. Zur Erzeugung der gewünschten Trennfläche wird eine Vielzahl von Laserpulsen benachbart zueinander in das Substrat eingebracht.

Dabei ist grundsätzlich auch eine Variante denkbar, bei der das transmissive Medium in Richtung des Strahlenganges vor einer Fokussieroptik des Laserbearbeitungskopfes an diesem angeordnet ist, sodass die Laserstrahlung zunächst durch das transmissive Medium und anschließend durch die Fokussieroptik hindurch gelenkt und auf das Substrat gerichtet wird.

Der Effekt der intensitätsabhängigen Lichtbrechung kann selbstverständlich an den jeweiligen Verwendungszweck beispielsweise dadurch angepasst werden, dass das transmissive Medium entsprechend angepasst oder ausgetauscht wird oder dass der Laserstrahl mehrere transmissive Medien oder dasselbe Medium mehrfach durchläuft.

Der Fokuspunkt könnte auf eine dem Laserbearbeitungskopf abgewandte Rückseite des Substrates gerichtet werden und das transmissive Medium so beschaffen sein, dass der intensitätsabhängige Fokuspunkt bei dem Intensitätsmaximum eine dem Laserbearbeitungskopf zugewandte Vorderseite erreicht. Besonders praxisgerecht ist es hingegen, wenn die Laserstrahlung auf einen Fokuspunkt beabstandet zu einer dem Laserbearbeitungskopf abgewandten Rückseite des Substrates ablenkbar ist, sodass die Rückseite des Substrates nicht bei einem Intensitätsminimum, sondern erst im Verlauf zunehmender Intensität erreicht wird. Somit wird eine für die zu erzielende Modifikation stets ausreichende Intensität der Laserstrahlung innerhalb des Substrates sichergestellt.

Zur Bearbeitung ist grundsätzlich jeder gepulste Laser geeignet, wobei sich bereits ein Laser mit einer Pulsdauer von weniger als 50 ps, vorzugsweise weniger als 5 ps als besonders zweckmäßig erwiesen hat.

Zudem ist es besonders sinnvoll, wenn der Laserbearbeitungskopf zur Fokussierung eine Fokussieroptik mit einer numerischen Apertur (NA) größer als 0,3, insbesondere größer als 0,4 aufweist.

Eine besonders vielversprechende Gestaltung der Vorrichtung wird auch dadurch erreicht, dass die Fokussieroptik eine Gradienten-Index-Linse aufweist. Durch den Einsatz einer solchen, auch als GRIN-Linse bekannten Linse führt der in radialer Richtung abnehmende Brechungsindex dazu, dass die anderenfalls vorhandene Abschwächung der Intensität im Randbereich der Linse weitgehend ausgeglichen wird.

Weiterhin erweist es sich als vorteilhaft, wenn das transmissive Medium aus Glas, insbesondere aus Quarzglas besteht, um so einen ausgeprägten intensitätsabhängigen Brechungsindex zu realisieren.

Dabei ist das transmissive Medium vorzugsweise mit dem Laserbearbeitungskopf verbunden und mit diesem gemeinsam beweglich angeordnet sowie an dem Laserbearbeitungskopf insbesondere austauschbar angeordnet. Hierzu eignet sich beispielsweise eine Schnellfixierung.

Vorzugsweise ist die Vorrichtung zusätzlich zu einem Pulslaser mit einem kontinuierlich emittierenden Laser ausgestattet, wobei das transmissive Medium transparent für die Wellenlänge des kontinuierlich emittierenden Lasers ist und der kontinuierlich emittierende Laser durch das Medium hindurch auf das Glassubstrat bzw. unter Umgehung des transmissiven Mediums auf das Glassubstrat gerichtet wird. Die Wellenlänge des Pulslasers und des kontinuierlich emittierenden Lasers können dabei unterschiedlich sein. Weiterhin können die Laserstrahlungen der verschiedenen Laserquellen von unterschiedlichen Seiten auf das Glassubstrat gerichtet werden.

Die Erfindung lässt verschiedene Ausführungsformen zu. Zur weiteren Verdeutlichung ihres Grundprinzips ist eine davon in der Zeichnung dargestellt und wird nachfolgend beschrieben.

Diese zeigt in
- Fig. 1: eine Prinzipdarstellung eines Verfahrens nach dem Stand der Technik;
- Fig. 2: ein Ablaufdiagramm mit mehreren Verfahrensschritten zum Einbringen einer Mehrzahl von Durchbrechungen in ein Substrat;
- Fig. 3: die intensitätsabhängige Fokuslage während eines Einzelpulses;
- Fig. 4: eine Diagrammdarstellung der Intensitätsverteilung über die Zeit während der Dauer eines Einzelpulses.

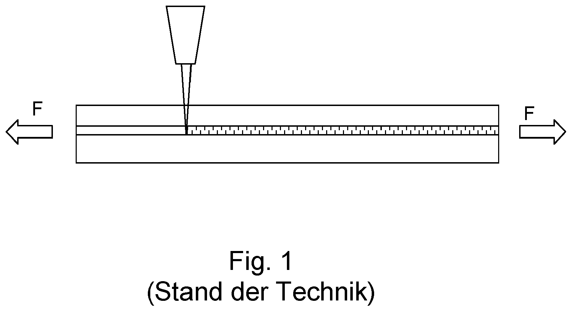

In Figur 1 ist ein auch als "Stealth Dicing" bekanntes Laser-Bearbeitungs-Verfahren in einer Prinzipdarstellung gezeigt. Wie zu erkennen wird dabei der Laserstrahl auf eine spezielle Zwischenschicht innerhalb eines Substrates gerichtet, die durch die Laserstrahlung modifiziert zum Startpunkt der nachfolgenden Trennung des Substrates wird. Eine äußere Zugspannung bewirkt dann die Trennung des Substrates in Teilbereiche entlang der Einwirkungspunkte in der Schicht.

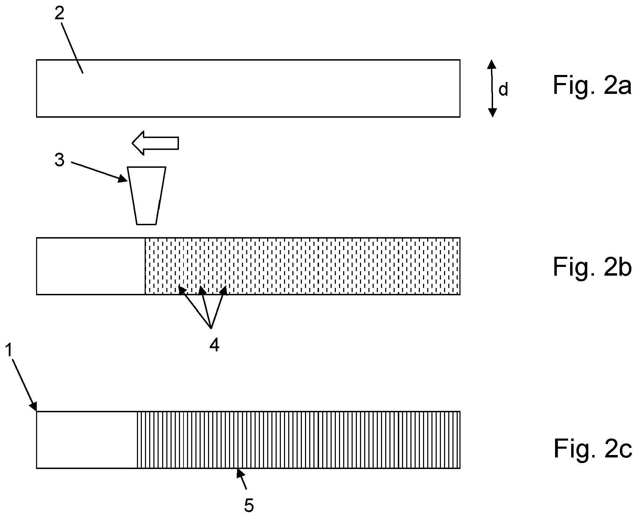

Figur 2 zeigt die einzelnen Verfahrensschritte beim Einbringen einer Mehrzahl von Durchbrechungen in einen als Kontaktierungselement in der Leiterplattenfertigung bestimmten Interposer 1 mit einem Substrat 2. Hierzu wird eine Laserstrahlung 3 auf die Oberfläche des Substrates 2 gerichtet. Das Substrat 2 weist als einen wesentlichen Materialanteil ein Boro-Aluminosilikat auf, um so eine Temperaturausdehnung ähnlich der von Silizium sicherzustellen. Die Materialstärke d des Substrates 2 beträgt dabei zwischen 50 µm und 500 µm. Die Einwirkungsdauer der Laserstrahlung 3 wird dabei äußerst kurz gewählt, sodass lediglich eine Modifikation des Substrates 2 konzentrisch um eine Strahlachse des Laserstrahles eintritt, ohne dass es zu einer wesentlichen Zerstörung bzw. einem erheblichen Materialabtrag des Substratmaterials kommt. Insbesondere wird die Einwirkungsdauer auf einen Einzelpuls beschränkt. Hierzu wird der Laser mit einer Wellenlänge betrieben, für die das Substrat 2 transparent ist. Ein derart modifizierter Bereich 4 ist in Figur 2b dargestellt. In einem nachfolgenden, in Figur 2c dargestellten Verfahrensschritt bilden die modifizierten Bereiche 4 des Substrates 2, die zuvor eine Modifikation durch die Laserstrahlung 3 erfahren haben, eine Trennfläche 5 entlang der linienförmigen Aneinanderreihung der modifizierten Bereiche 4 in dem Substrat 2.

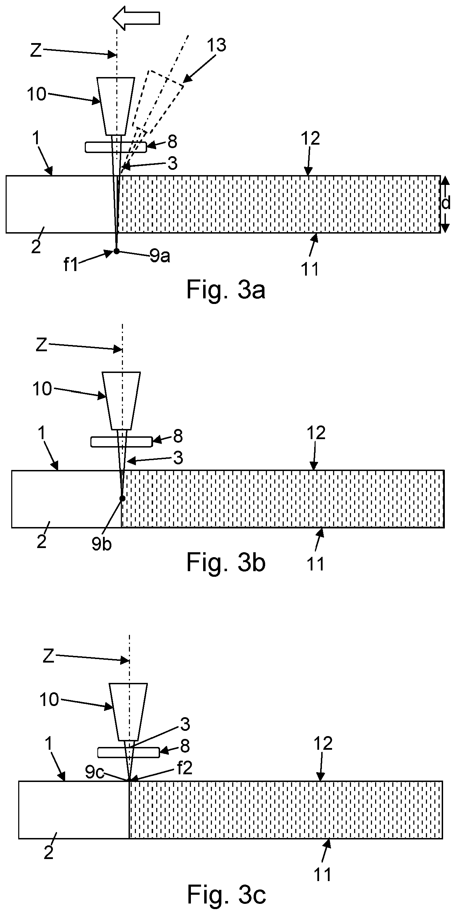

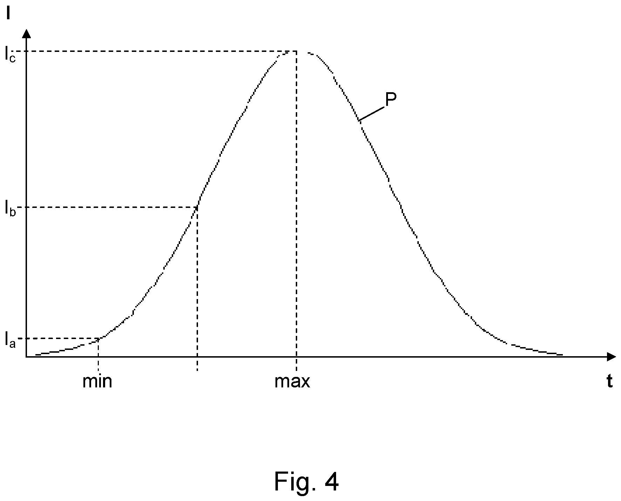

Anhand der Figuren 3 und 4 wird nachstehend ein wesentlicher Effekt während der Laserbearbeitung des Substrates 2 näher dargestellt. Dabei handelt es sich um die die intensitätsabhängige Fokuslage während eines Einzelpulses P. Die Erfindung geht dabei von der Erkenntnis aus, dass die Intensität I eines Einzelpulses P der Laserstrahlung 3 nicht konstant ist, sondern wie in Figur 4 dargestellt über den zeitlichen Verlauf des Einzelpulses eine von einem Minimum Iₐ über einen Mittelwert I_{b} bis zu einem Maximum I_{c} ansteigende und danach abfallende Intensität beispielsweise entsprechend einer Normalverteilung aufweist. Zugleich ändert sich aufgrund der veränderlichen Intensität I der Brechungsindex, insbesondere auch eines transmissiven Mediums 8, bezogen auf einen Einzelpuls P über den zeitlichen Verlauf t. Dadurch verändern sich auch die in den Figuren 3a bis 3c dargestellten intensitätsabhängigen Fokuslagen 9a, 9b, 9c der Laserstrahlung 3 unabhängig von der durch eine Fokussieroptik eines Laserbearbeitungskopfes 10 bestimmten geometrischen Fokuslage. Dieser Effekt wird durch das zwischen dem Laserbearbeitungskopf 10 und dem Substrat 2 angeordnete transmissive Medium 8 beispielsweise aus Glas, das einen größeren intensitätsabhängigen Brechungsindex als Luft aufweist, so verstärkt, dass der Abstand der Fokuslagen 9a, 9c zwischen einer maximalen Intensität I_{c}, und einer minimalen Intensität Iₐ zumindest der gewünschten Längserstreckung, also der Tiefe der einzubringenden Ausnehmung bzw. wie dargestellt im Falle eines einzubringenden Trennfläche 5 der Materialstärke d des Substrates 2 entspricht. Der intensitätsabhängige Fokuspunkt 9a, 9b, 9c wandert also entlang der Strahlachse Z ausgehend von einem zu einer Rückseite 11 des Substrates 2 beabstandeten, in der Figur 3a gezeigten Position in Richtung des Laserbearbeitungskopfes 10 und erreicht so in einer stetigen Bewegung alle Positionen entlang der Strahlachse Z zwischen der Rückseite 11 und einer dem Laserbearbeitungskopf 10 zugewandten Vorderseite 12, sodass es zu der gewünschten Modifikation im Bereich der gesamten Haupterstreckung der später einzubringenden Ausnehmungen kommt.

Ergänzend ist in Figur 3a lediglich andeutungsweise ein zusätzlicher Laserbearbeitungskopf 13 dargestellt, durch den die Laserstrahlung 3 eines gepulsten Lasers ergänzend zu einer mit dem Laserbearbeitungskopf 10 verbundenen kontinuierlich emittierenden Laserquelle wahlweise durch das transmissive Medium 8 hindurch oder unter Umgehung desselben auf das Glassubstrat 2 gerichtet wird. Hierdurch wird die in Figur 4 dargestellte Intensität I eines Einzelpulses P der Laserstrahlung 3 entsprechend durch die Intensität der kontinuierlich emittierenden Laserquelle verstärkt.

## Patentansprüche

1. Verfahren zum Trennen eines insbesondere ebenen Substrates (2) mittels eines optischen Systems, wobei die Dicke des Substrates (2) im Bereich einer Trennlinie 2 mm nicht übersteigt, mittels gepulster Laserstrahlung (3) mit einer Pulsdauer (t), wobei das Substratmaterial des Substrates (2) für die Laserwellenlänge zumindest teilweise transparent ist und die Laserstrahlung (3) mit Hilfe des optischen Systems der Brennweite (f1) fokussiert wird und die Intensität der Laserstrahlung (3) zu einer Modifikation des Substrates (2) entlang einer Strahlachse (Z) der Laserstrahlung (3), jedoch nicht zu einem durchgehenden Materialabtrag führt und wobei die Modifikation des Substrates (2) entlang einer Strahlachse (Z) des Laserstrahls erfolgt, ohne dass es zu einer das Substrat (2) durchdringenden Zerstörung des Substrates (2) kommt, und die gepulste Laserstrahlung (3) entlang einer beliebigen Trennlinie parallel zu der Haupterstreckungsebene des Substrates (2) bewegt wird, wodurch ein nachfolgender Separationsvorgang entlang der Trennlinie erfolgt, wobei die Laserstrahlung (3) durch nichtlineare Selbstfokussierung innerhalb der Pulsdauer (t) eines Einzelpulses (P) durch dasselbe, an sich unveränderte, optische System mit einer von der ursprünglichen Brennweite (f1) verschiedenen Brennweite (f2) fokussiert wird und dass der nachfolgende Separationsvorgang durch einen anisotropen Abtrag im Wesentlichen entlang der Trennlinie erfolgt, und wobei die Intensität (I) eines Einzelpulses (P) der Laserstrahlung (3) über den zeitlichen Verlauf des Einzelpulses eine von einem Minimum (Iₐ) über einen Mittelwert bis zu einem Maximum (I_{c}) ansteigende und danach abfallende Intensität aufweist, wodurch sich unabhängig von der durch die Fokussieroptik des Laserbearbeitungskopfes (10) bestimmten geometrischen Fokuslage die intensitätsabhängigen Fokuslagen der Laserstrahlung verändern, **dadurch gekennzeichnet, dass** die Differenz zwischen der Brennweite (f2) und der ursprünglichen Brennweite (f1) größer ist als die Dicke des Substrates (2) im Bereich der einzubringenden Trennlinie, zumindest aber 20 µm beträgt, und dass der anisotrope Materialabtrag durch Ätzung durchgeführt und die Materialtrennung in den modifizierten Bereichen des Substrates (2) durch den anisotropen Materialabtrag mittels Flüssigätzen, Trockenätzen oder Dampfphasenätzen herbeigeführt wird.

2. Verfahren nach Anspruch 1, **dadurch gekennzeichnet, dass** das Substrat (2) als einen wesentlichen Materialanteil Glas, Saphir und/oder Silizium aufweist.

3. Verfahren nach zumindest einem der vorhergehenden Ansprüche, **dadurch gekennzeichnet, dass** der nachfolgende Separationsvorgang entlang der Trennlinie infolge von inneren Spannungen des Substrates (2) erfolgt.

4. Verfahren nach Anspruch 3, **dadurch gekennzeichnet, dass** die inneren Spannungen durch eine äußere Krafteinwirkung auf das Substrat (2) hervorgerufen werden.

5. Verfahren nach Anspruch 3 oder 4, **dadurch gekennzeichnet, dass** die inneren Spannungen durch thermische Spannungen, insbesondere durch eine starke Temperaturdifferenz hervorgerufen werden.

6. Verfahren nach Anspruch 1, **dadurch gekennzeichnet, dass** die Ätzung in Fluorwasserstoffsäure durchgeführt wird.

7. Verfahren nach zumindest einem der vorhergehenden Ansprüche, **dadurch gekennzeichnet, dass** das Substrat (2) vor der Laserbestrahlung zumindest einseitig mit einem Ätzresist (7) beschichtet wird.

8. Verfahren nach Anspruch 7, **dadurch gekennzeichnet, dass** das Substrat (2) einseitig mit einer oder mehreren Schichten des Ätzresists (7) mit einer jeweiligen Dicke von weniger als 10µm versehen wird.

9. Verfahren nach zumindest einem der vorhergehenden Ansprüche, **dadurch gekennzeichnet, dass** während die Laserstrahlung (3) auf das Substrat (2) einwirkt, das Substrat (2) relativ zu der Laserstrahlung (3) und/oder dem Laserbearbeitungskopf (10) insbesondere unterbrechungsfrei bewegt wird.

## Claims

1. A method for separating a substrate (2), which is planar in particular, by means of an optical system, wherein the thickness of the substrate (2) in the area of a separating line does not exceed 2 mm, by means of pulsed laser radiation (3) having a pulse duration (t), wherein the substrate material of the substrate (2) is at least partially transparent to the laser radiation and the laser radiation (3) is focused with the aid of the optical system of the focal length (f1) and the intensity of the laser radiation (3) results in a modification of the substrate (2) along a beam axis (Z) of the laser radiation (3), but not a continuous material removal, and wherein the modification of the substrate (2) takes place along a beam axis (Z) of the laser beam without a destruction of the substrate (2) penetrating the substrate (2) occurring, and the pulsed laser radiation (3) is moved along an arbitrary separating line in parallel to the main extension plane of the substrate (2), due to which a subsequent separation process takes place along the separating line, wherein the laser radiation (3) is focused by nonlinear self-focusing within the pulse duration (t) of a single pulse (P) by the same optical system, which is unchanged as such, with a focal length (f2) different from the original focal length (f1), and that the subsequent separation process is carried out by an anisotropic removal essentially along the separating line, and wherein the intensity (I) of a single pulse (P) of the laser radiation (3) has an intensity over the time curve of the single pulse increasing from a minimum (Iₐ) via a mean value to a maximum (I_{c}) and then falling, due to which the intensity-dependent focal positions of the laser radiation change from the geometric focal position defined by the focusing optical unit of the laser processing head (10), **characterized in that** the difference between the focal length (f2) and the original focal length (f1) is greater than the thickness of the substrate (2) in the area of the separating line to be introduced, but is at least 20 µm, and the anisotropic material removal is carried out by etching and the material separation in the modified areas of the substrate (2) is induced by anisotropic material removal by means of liquid etching, dry etching, or vapor phase etching.

2. The method according to Claim 1, **characterized in that** the substrate (2) includes glass, sapphire, and/or silicon as a significant material component.

3. The method according to at least one of the preceding claims, **characterized in that** the following separation process takes place along the separating line as a result of internal tensions of the substrate (2).

4. The method according to Claim 3, **characterized in that** the internal tensions are induced by an external force action on the substrate (2).

5. The method according to Claim 3 or 4, **characterized in that** the internal tensions are induced by thermal tensions, in particular due to a strong temperature difference.

6. The method according to Claim 1, **characterized in that** the etching is carried out in hydrofluoric acid.

7. The method according to at least one of the preceding claims, **characterized in that** the substrate (2) is coated on at least one side with an etch resist (7) before the laser irradiation.

8. The method according to Claim 7, **characterized in that** the substrate (2) is provided on one side with one or more layers of the etch resist (7) having a respective thickness of less than 10 µm.

9. The method according to at least one of the preceding claims, **characterized in that,** while the laser radiation (3) acts on the substrate (2), the substrate (2) is moved, in particular without interruption, relative to the laser radiation (3) and/or the laser processing head (10).

## Revendications

1. Procédé de séparation d'un substrat notamment plan (2) au moyen d'un système optique, l'épaisseur du substrat (2) dans la zone d'une ligne de séparation ne dépassant pas 2 mm, au moyen d'un rayonnement laser pulsé (3) ayant une durée d'impulsion (t), le matériau du substrat (2) étant au moins partiellement transparent à la longueur d'onde du laser et le rayonnement laser (3) étant focalisé à l'aide du système optique de distance focale (f1) et l'intensité du rayonnement laser (3) entraînant une modification du substrat (2) le long d'un axe de faisceau (Z) du rayonnement laser (3), mais pas un enlèvement de matière continu et la modification du substrat (2) s'effectuant le long d'un axe de faisceau (Z) du faisceau laser, sans qu'il se produise une destruction du substrat (2) traversant le substrat (2), et le rayonnement laser pulsé (3) étant déplacé le long d'une ligne de séparation arbitraire parallèle au plan d'extension principal du substrat (2), entraînant ainsi un processus de séparation ultérieur le long de la ligne de séparation, le rayonnement laser (3) étant focalisé par autofocalisation non linéaire à l'intérieur de la durée d'impulsion (t) d'une impulsion unique (P) par le même système optique, inchangé en soi, ayant une distance focale (f2) différente de la distance focale (f1) initiale, et par le fait que le processus de séparation ultérieur s'effectue par un enlèvement anisotrope sensiblement le long de la ligne de séparation, et l'intensité (I) d'une impulsion individuelle (P) du rayonnement laser (3) présentant, au cours de l'évolution temporelle de l'impulsion individuelle, une intensité croissante depuis un minimum (Iₐ) jusqu'à un maximum (I_{c}) en passant par une valeur moyenne, puis décroissante, de sorte que les positions focales du rayonnement laser, qui dépendent de l'intensité, se modifient indépendamment de la position focale géométrique déterminée par l'optique de focalisation de la tête d'usinage laser (10), **caractérisé en ce que** la différence entre la distance focale (f2) et la distance focale (f1) initiale est supérieure à l'épaisseur du substrat (2) dans la zone de la ligne de séparation à introduire, mais est d'au moins 20 µm, et **en ce que** l'enlèvement de matière anisotrope est effectué par gravure et la séparation de matière dans les zones modifiées du substrat (2) est provoquée par l'enlèvement de matière anisotrope au moyen d'une gravure liquide, d'une gravure à sec ou d'une gravure en phase vapeur.

2. Procédé selon la revendication 1, **caractérisé en ce que** le substrat (2) comporte, en tant que fraction sensiblement importante de matière, du verre, du saphir et/ou du silicium.

3. Procédé selon au moins l'une des revendications précédentes, **caractérisé en ce que** le processus de séparation ultérieur le long de la ligne de séparation se produit en raison de contraintes internes du substrat (2) .

4. Procédé selon la revendication 3, **caractérisé en ce que** les contraintes internes sont provoquées par l'application de l'extérieur d'une force sur le substrat (2) .

5. Procédé selon la revendication 3 ou 4, **caractérisé en ce que** les contraintes internes sont provoquées par des contraintes thermiques, notamment par une forte différence de température.

6. Procédé selon la revendication 1, **caractérisé en ce que** la gravure est réalisée dans de l'acide fluorhydrique.

7. Procédé selon au moins l'une des revendications précédentes, **caractérisé en ce que** le substrat (2) est revêtu au moins sur une face d'une réserve de gravure (7) avant l'exposition au laser.

8. Procédé selon la revendication 7, **caractérisé en ce que** le substrat (2) est revêtu sur une face d'une ou de plusieurs couches de la réserve de gravure (7) ayant chacune une épaisseur inférieure à 10 µm.

9. Procédé selon au moins l'une des revendications précédentes, **caractérisé en ce que**, pendant que le rayonnement laser (3) agit sur le substrat (2), le substrat (2) est déplacé par rapport au rayonnement laser (3) et/ou à la tête d'usinage laser (10), notamment sans interruption.
